# EUROPÄISCHE PATENTSCHRIFT

(11) **EP 2 458 174 B1**
(45) Veröffentlichungstag und Bekanntmachung des Hinweises auf die Patenterteilung: **10.06.2015**
(21) Anmeldenummer: 11401605.8
(22) Anmeldetag: 30.09.2011
(51) Int. Cl.: F02C 6/16

(54) **Verfahren zum Betrieb eines adiabatischen Druckluftspeicherkraftwerks und adiabatisches Druckluftspeicherkraftwerk**
Method for operating an adiabatic compressed air storage power plant and adiabatic compressed air power plant
Procédé de fonctionnement d'une centrale d'accumulation d'air comprimé adiabatique et centrale d'accumulation d'air comprimé adiabatique

(30) Priorität: 30.11.2010 DE 102010060891
(43) Veröffentlichungstag der Anmeldung: 30.05.2012
(73) Patentinhaber: Ed. Züblin AG, 70563 Stuttgart (DE)
(72) Erfinder: Mayer, Peter-Michael, Dr., 70192 Stuttgart (DE); Niklasch, Christoph, Dr., 71139 Ehningen (DE)

(56) Entgegenhaltungen:
- US-A- 4 100 745
- US-A1- 2004 148 922
- US-A1- 2006 059 937
- US-A1- 2011 094 236

## Beschreibung

### Technisches Gebiet

Die Erfindung betrifft ein Verfahren zum Betrieb eines adiabatischen Druckluftspeicherkraftwerks gemäß dem Oberbegriff des Anspruchs 1 sowie ein adiabatisches Druckluftspeicherkraftwerk zur Durchführung eines solchen Verfahrens gemäß dem Oberbegriff des Anspruchs 10.

### Stand der Technik

Beispielsweise um wetterabhängige regenerative Energiequellen, wie etwa Windkraft und/oder Solarenenergie, zur Spitzenlast- und/oder Mittellast- und/oder Grundlast-Stromversorgung vorzusehen, werden Speicherkraftwerke benötigt, welche die Energie von während günstiger Wetterbedingungen gegenüber dem Stromverbrauch zuviel produzierten Stroms zum Ausgleich während ungünstiger Wetterbedingungen gegenüber dem Stromverbrauch zuwenig produzierten Stroms speichern können. Dabei kann auch längerfristig vorgesehen sein Energiemengen vorzuhalten, die beispielsweise Nachfrageunterschiede zwischen Sommer und Winter ausgleichen können.

Allgemein werden Speicherkraftwerke benötigt, um die Energie von während Zeiten geringen Stromverbrauchs zuviel produzierten Stroms zumindest so lange zwischenzuspeichern, bis der Stromverbrauch den momentan erzeugten Strom zu übersteigen droht.

Ein Druckluftspeicherkraftwerk ist ein Beispiel für ein solches Speicherkraftwerk.

Im Unterschied zu einem für den gleichen Einsatzzweck entwickelten Pumpspeicherkraftwerk, bei dem zu Schwachlastzeiten in einen hoch gelegenen Speichersee gepumptes Wasser über Fallrohre nach unten fließt und dabei mittels einer oder mehrerer Turbinen einen oder mehrere Generatoren antreibt, nutzt ein Druckluftspeicherkraftwerk die Energie, die in verdichteter bzw. komprimierter Luft steckt. In Schwachlastzeiten wird hierbei mit einem elektrisch angetriebenen Verdichter Luft verdichtet und in einem Druckluftspeicher gespeichert, beispielsweise in einer unterirdischen Kaverne oder Mine. In Zeiten z.B. hoher Stromnachfrage, wie etwa bei Spitzenlast, wird die Druckluft aus dem Druckluftspeicher entnommen und in einer Turbine entspannt, die ihre Leistung an einen gekoppelten Generator abgibt.

Dabei stellt ein Druckluftspeicherkraftwerk kein Kraftwerk im herkömmlichen Sinne dar, da bei der Verdichtung der Luft mehr Energie aufgewandt werden muss, als bei deren Entspannung wieder entnommen werden kann. Ein Druckluftspeicherkraftwerk ist demnach vielmehr ein Energiespeicher mit einem oder mehreren Druckluftspeichern und angeschlossener Turbine und Generator zur Bereitstellung elektrischen Stroms zu Zeiten der Spitzenlast.

Bekannte Probleme von Druckluftspeicherkraftwerken sind deren eingeschränkter Gesamtwirkungsgrad bedingt einerseits durch hohe Verluste aufgrund beabsichtigter und unbeabsichtigter Wärmeabgabe bei der Erzeugung und Speicherung der Druckluft sowie andererseits durch gegebenenfalls vorgesehene, der Gefahr einer Vereisung der Turbine bei der Entspannung der Druckluft entgegnwirkender konventioneller Maßnahmen. Die Gründe hierfür sind folgende:
- Die Verdichtung bzw. Kompression der Luft führt zu einer Erhöhung von deren Temperatur. Näherungsweise kann hierbei von einer adiabatischen Zustandsänderung ausgegangen werden, bei der die vom Verdichter an der Luft verrichtete Arbeit direkt die innere Energie der Luft und damit deren Temperatur erhöht. Hierbei können je nach thermodynamischem Ausgangszustand der Luft, Verdichterleistung und Gesamtdruckverhältnis aller Stufen des Verdichters Temperaturen von weit über 1000°C erreicht werden. Um die Komponenten der Anlage vor diesen Temperaturen zu schützen ist bekannt, die Temperatur der verdichteten Luft über beispielsweise kühlmitteldurchströmte Wärmetauscher an die Umgebung abzugeben.
- Abhängig von der Dauer des Verbleibs der verdichteten Luft bis zu deren Wiederentnahme im Druckluftspeicher findet eine Abgabe eines Teils der Wärme über die Wandungen des Druckluftspeichers an die Umgebung statt. Ist der Druckluftspeicher beispielsweise eine Kaverne oder eine Mine wird die Wärme an das umgebende Mineral bzw. Gestein abgegeben.
- Die Luft kühlt bei der Expansion in der Turbine stark ab. Hierdurch kann in der Luft enthaltene Restfeuchtigkeit gefrieren und die Turbine vereisen. Um dies zu verhindern muss die Luft vor oder während der Entspannung erwärmt werden, beispielsweise durch konventionelles Zuheizen mittels eines Brennstoffs, wie etwa Erdgas. Hierbei wird der Brennstoff der Luft bei deren Entnahme aus dem Druckluftspeicher beigemengt. Das Brennstoff-Luft-Gemisch wird anschließend vor dem Eintritt in eine Gasturbine entzündet, welche den Generator antreibt.

Zur Verbesserung des Gesamtwirkungsgrads von Druckluftspeicherkraftwerken ist bekannt, die Restwärme der der Gasturbine entweichenden Abgase mittels eines Rekuperators der aus dem Druckluftspeicher entnommenen Luft noch vor deren Eintritt in die Gasturbine zuzuführen. Hierdurch wird zumindest der Brennwert des Brennstoff-Luft-Gemischs besser ausgeschöpft.

Darüber hinaus sind so genannte adiabatische Druckluftspeicherkraftwerke bekannt, bei denen zumindest zum Teil die bei der Verdichtung der Luft erzeugte Wärme unter Abkühlung der verdichteten Luft bei deren Zufuhr zum Druckluftspeicher einem Wärmespeicher zugeführt wird und der Wärmespeicher bei der Entnahme der Druckluft aus dem Druckluftspeicher wieder entladen wird, indem die in dem Wärmespeicher gespeicherte Wärme der unter Entspannung durch die Turbine strömenden Luft wieder zugeführt wird. Bei der Entnahme aus dem Druckluftspeicher durchströmt die komprimierte Luft hierbei den Wärmespeicher, erhitzt sich und gelangt erst dann in die Turbine. Dadurch wird weniger oder idealerweise gar kein Brennstoff zur Erwärmung der Luft benötigt. Während der Expansion in der Turbine kühlt die Luft auf Umgebungstemperatur ab. Ein adiabatisches Druckluftspeicherkraftwerks umfasst somit wenigstens zwei Energiespeicher, mindestens einen ersten bestehend aus einem oder mehreren Druckluftspeichern zur Zwischenspeicherung potentieller Energie, sowie mindestens einen zweiten bestehend aus mindestens einem Wärmespeicher zur Zwischenspeicherung von Wärme. Ein adiabatisches Druckluftspeicherkraftwerk erreicht so im Vergleich zu einem zuvor beschriebenen Druckluftspeicherkraftwerk mit Gasturbine einen höheren Wirkungsgrad. Entgegen ihrer Bezeichnung führen adiabatische Druckluftspeicherkraftwerke jedoch keine adiabatischen Zustandsänderungen aus, sie kommen durch die Rückführung der bei der Verdichtung erzeugten Wärme an die aus dem Druckluftspeicher entnommene Luft dem Wirkungsgrad adiabatischer Zustandsänderungen lediglich näher.

Damit ein Wärmespeicher seine Wärmespeicherfunktion erfüllen kann, weist dieser vorzugsweise in einem beispielsweise durch einen Behälterinnenraum gebildeten Wärmespeicherraum beherbergte Wärmespeichermittel auf. Die Wärmespeichermittel sind in der Lage, einem Arbeitsfluid Wärme zu entnehmen, die Wärme über einen bestimmten Zeitraum hinweg zu speichern und anschließend beispielsweise dem selben Arbeitsfluid wieder zuzuführen. Dabei wird den Wärmespeichermitteln zunächst vermittels des Arbeitsfluids Wärme zugeführt, welche anschließend von den Wärmespeichermitteln möglichst verlustarm gespeichert wird, um zumindest einen Teil der gespeicherte Wärme den Wärmespeichermitteln bei Bedarf vermittels des Arbeitsfluids wieder zu entziehen.

Bei dem Arbeitsfluid kann es sich direkt um die dem Druckluftspeicher zuzuführende und diesem wieder zu entnehmende Druckluft handeln. Anstelle von Luft kommt hierbei grundsätzlich jedes unter Betriebsbedingungen eines Druckluftspeicherkraftwerks gasförmige, kompressible Medium in Frage. Bei dem Arbeitsfluid kann es sich auch um ein Wärmeübertragungsmittel handeln, dass in einem eigenen Kreislauf zirkuliert, der zumindest einen zwischen Verdichter und Druckluftspeicher bzw. Druckluftspeicher und Turbine angeordneten Wärmetauscher umfasst, welcher primärseitig von der Druckluft durchströmt ist.

Handelt es sich bei dem Arbeitsfluid um die dem Druckluftspeicher zuzuführende und diesem wieder zu entnehmende Druckluft, kann der Wärmespeicher einen auch als Containment bezeichneten Druckbehälter umfassen, beispielsweise indem er Teil eines als Wärmespeicher ausgeführten Druckbehälters ist, welcher den Wärmespeicherraum mit den darin beherbergten Wärmespeichermitteln umgibt, so dass die Wärmespeichermittel zumindest während des Auf- und Entladens des Druckspeichers von der Druckluft durchströmt werden können und dabei zum Wärmeaustausch unmittelbar mit der Druckluft in Kontakt kommen.

Ein Nachteil der bekannten Druckluftspeicherkraftwerke ist, dass deren Turbomaschinen für ein bestimmtes Druck- und Temperaturniveau ausgelegt sind, bei dem sie ihren optimalen Wirkungsgrad erreichen.

Im tatsächlichen Betrieb eines adiabatischen Druckluftspeicherkraftwerks verändern sich jedoch die beiden Größen Druck und Temperatur während der Entnahme der Druckluft aus dem Druckluftspeicher, wodurch der tatsächlich erreichbare Wirkungsgrad in nahezu allen Betriebszuständen niedriger ist, als im Auslegungszustand.

Um den Druck im Druckluftspeicher während der Entnahme konstant zu halten, ist ein isobarer Druckluftspeicher bekannt. Dieser ist unterhalb einer Wassersäule positioniert. Dies kann erreicht werden, indem der Druckluftspeicher, wie etwa eine unterirdische Kaverne, mit einem höher gelegenen Wasserspeicher, beispielsweise einem See verbunden wird. Während des Einblasens der Luft in die Kaverne verdrängt sie das Wasser von dort in den See, wohingegen während der Entnahme der Druckluft das Wasser wieder in die Kaverne strömt. Die Druckänderung reduziert sich dadurch auf die Schwankung der Oberfläche des Sees. Praktisch keinen Druckänderungen ausgesetzt ist ein am Meeresgrund positionierter und mit dem umgebenden Seewasser kommunizierender Druckluftspeicher.

In Anlehnung an den zuvor beschriebenen isobaren Druckluftspeicher wäre eine Lösung des bestehenden Problems einer während der Entnahme der Druckluft aus dem Druckluftspeicher veränderlichen Turbomaschineneintrittstemperatur ein isothermer Wärmespeicher. Isotherme Wärmespeicher sind in kleiner Ausführung in Form so genannter Latentwärmespeicher bekannt, beispielsweise in Kraftfahrzeugen. In einer für ein adiabatisches Druckluftspeicherkraftwerk erforderlichen Dimension und für das benötigte Temperaturniveau sind Latentwärmespeicher jedoch weder verfügbar, noch nach dem derzeitigen Stand der Technik zu verwirklichen.

Von Winderhitzern in Hochöfen, so genannten Cowpern, welche zumeist paarweise im Wechsel betrieben werden, ist bekannt, der Luft, die den Winderhitzer durchströmt hat, dem so genannten Heißwind, einen zeitlich ständig abnehmender Teil Außenluft beizumischen und so einen Mischwind konstanter Temperatur zu erzeugen. Zum Hochofen gelangt so ein regelbarer und nahezu temperaturkonstanter Windstrom. Das Ende jeder Windperiode ist dabei erreicht, wenn der Heißwind aus dem Winderhitzer ohne Beimischung von Außenluft die geforderte Temperatur unterschreitet. Hierzu umfasst jeder Cowper einen Verbrennungsraum und einen Speicherraum, der mit feuerbeständigen Steinen ausgemauert ist. Das Gichtgas wird im Verbrennungsraum mit Erdgas angereichert und nachverbrannt, das dabei anfallende heiße Abgas über die Speichersteine geleitet und abgeführt. Dabei werden die Steine erhitzt und geben, wenn der Winderhitzer auf Frischluftzufuhr umgestellt wird, diese Wärme wieder ab und erzeugen so den Heißwind mit einer Temperatur von Anfangs etwa 1300°C. Da beim Einblasen in den Hochofen eine möglichst konstante Windtemperatur von 1200°C notwendig ist, wird durch Beimischung von unerwärmter Außenluft ein Mischwind erzeugt, der dies bei einem sich ständig abkühlenden Winderhitzer gewährleistet.

Die Übertragbarkeit dieses Ansatzes auf Druckluftspeicherkraftwerke scheitert am für eine Beimischung von Außenluft bereitzustellenden, dem herrschenden Druck im Druckluftspeicher entsprechenden Druckniveau, was eine Beimischung von Außenluft weder ökonomisch, noch ökologisch vertretbar macht. Darüber hinaus wäre mindestens ein zweiter, im Wechsel betriebener Wärmespeicher erforderlich, welcher die bei der Verdichtung der Außenluft auf das notwendige Druckniveau entstehende Wärme zunächst aufnehmen müsste, damit durch die Beimischung ein unterhalb der Temperatur eines ersten Wärmespeichers liegendes, konstantes Temperaturniveau erreicht werden könnte.

Zusammengefasst entspricht der tatsächliche Wirkungsgrad adiabatischer Druckluftspeicherkraftwerke nicht dem rechnerischen Wirkungsgrad aus den Wirkungsgraden der Komponenten im Auslegungszustand.

Durch US 2006/0059937 A1 ist ein Wärme- und Druckluftspeicherkraftwerk (TACAS backup energy system; Thermal And Compressed Air Storage backup energy system) bekannt. Dieses weist einen Verdichter und eine Turbomaschine zum Entspannen von Druckluft auf. Dem Verdichter und der Turbomaschine zum Entspannen von Druckluft zwischengeschaltet ist ein zeitweilig mit diesen während des Verdichtens bzw. während des Entspannens kommunizierender Druckluftspeicher. Darüber hinaus verfügt das Druckluftspeicherkraftwerk über einen dem Druckluftspeicher nachgeschalteten Wärmespeicher. Der Wärmespeicher heizt zumindest einen Teil der während des Entspannens dem Druckluftspeicher entnommenen, kalten Druckluft auf. Der Wärmespeicher ist als ein Heizgerät ausgeführt. Der Wärmespeicher kann als ein abgasfreies Heizgerät, beispielsweise als ein umweltfreundliches Heizgerät, wie etwa ein elektrisches Heizgerät ausgeführt sein. Die Wärme wird durch eine elektrische Heizung in den Wärmespeicher eingebracht. Der Wärmespeicher kommuniziert ausschließlich mit der dem Druckspeicher entnommenen Druckluft während des Entspannens der Druckluft. Das Druckluftspeicherkraftwerk verfügt außerdem über einen Bypass, mit dem ein erster Teil der dem Druckluftspeicher entnommenen, kalten Druckluft am Wärmespeicher vorbei geführt wird, und anschließend mit einem zweiten Teil der dem Druckluftspeicher entnommenen, nach Durchlaufen des Wärmespeichers heißen Druckluft zu Mischdruckluft vermischt wird. Die Mischdruckluft wird anschließend der Turbomaschine zum Entspannen der Druckluft zugeführt. Der zweite Teil der dem Druckluftspeicher entnommenen Druckluft wird vor dem Durchlaufen des Druckluftspeichers zur Kühlung von Komponenten des Druckluftspeicherkraftwerks verwendet. Bei diesen Komponenten handelt es sich unter anderem um eine Leistungselektronik, welche die elektrische Leistungszufuhr zum Wärmespeicher regelt. Nach der bei der Kühlung erfolgten Wärmeaufnahme durchströmt die zumindest bereits teilweise expandierte Druckluft den Wärmespeicher zur weiteren Erwärmung, bevor sie dann einer Turbine zugeführt wird. Die Zufuhr der Kühlwärme zum Wärmespeicher und der Bypass dienen dazu, den Wärmespeicher klein zu halten und die Betriebstemperatur des Wärmespeichers zu regeln.

Durch US 2004/0148922 A2 ist ein Druckluftspeicherkraftwerk mit einem elektrisch oder durch Verbrennung beheizten Wärmespeicher bekannt. In einem gemeinsamen Kreislauf seriell angeordnete Wärmetauscher können vorgesehen sein, um während der Verdichtung entstehende Wärme dem Druckluftspeicher und bei später erfolgender Entnahme von Druckluft aus dem Druckluftspeicher die im Druckluftspeicher zwischengespeicherte Wärme der dem Druckluftspeicher entnommenen Druckluft noch vor deren Durchlaufen des Wärmespeichers zuzuführen. Dabei ist der Nutzungsgrad der gespeicherten Wärme gering, da zumindest bei der Entspannung die über den dem Verdichter zugeordneten Wärmetauscher abgegebene Wärme verloren geht. Der Wärmetauscher kann flüssigkeitsbefüllt sein, wodurch er Wärme zu speichern in der Lage ist. Alternativ kann vermittels eines Wärmetauschers Abwärme industrieller Prozesse während des Entspannens der Druckluft zugeführt werden.

Durch US 4,100,745 ist ein dampfbeheiztes Druckluftspeicherkraftwerk bekannt. Um den Nachteil mangelnder Zwischenkühlung im Verdichter eines adiabatischen Druckluftspeicherkraftwerks zu beheben und um die Druckluft auf ein gewünschtes Temperaturniveau zu erhitzen wird bei dem dampfbeheizten Druckluftspeicherkraftwerk mittels eines Zwischenkühlers während des Verdichtens der Druckluft entstehende Wärme an die Umgebung abgeführt, bevor die Druckluft einem Druckspeicher zugeführt wird. Im Entladebetrieb wird der dem Druckspeicher entnommenen Druckluft vor deren Entspannung in einer Turbomaschine vermittels dampfbeheizter Wärmetauscher Wärme zugeführt. Ein als Dampfspeicher bzw. Heißwasserspeicher ausgeführter Wärmespeicher stellt den Dampf zur Verfügung. Der Wärmespeicher ist mit der Abwärme eines Dampfprozesses beheizt.

Durch US 2011/0094236 A1 ist ein Kraftwerk bekannt, bei dem zunächst Druckluft vermittels eines ersten Verdichters Luft aus der Umgebung verdichtet, anschließend nochmals mittels eines zweiten Verdichters verdichtet und dann einer Brennkammer zugeführt wird, bevor das Abgas in einer mehrstufigen Turbine entspannt wird, deren Niederdruckturbine einen Generator, deren Mitteldruckturbine den zweiten Verdichter und deren Hochdruckturbine über eine Kupplung den ersten Verdichter antreibt. Parallel zum durch ein Ventil absperrbaren Strömungsweg zwischen dem ersten und dem zweiten Verdichter ist ein durch Ventile vollständig oder teilweise absperbarer alternativer Strömungsweg vorgesehen, dessen Nutzung während Zeiten eines Stromüberschusses und eines Strommangels im Versorgungsnetzwerk vorgesehen ist. Während eines Stromüberschusses treiben ein Elektromotor den ersten Verdichter und ein Elektromotor einen in dem zuschaltbaren Strömungsweg zwischen erstem Verdichter und zweitem Verdichter angeordneten dritten Verdichter an. Die vermittels des dritten Verdichters verdichtete Druckluft wird einem Druckspeicher zugeführt. Zuvor durchströmt die Druckluft einen zwischen dem dritten Verdichter und dem Druckspeicher angeordneten, Wärmespeichermittel beherbergenden Wärmespeicher. In den parallelen Strömungswegen sind optionale Zwischen- und Nachkühler vorgesehen. Während eines Strommangels wird der Druckspeicher entladen, wobei die Druckluft zunächst den Wärmespeicher durchströmt, dann den zweiten Verdichter und anschließend die Brennkammer und die Turbinenstufen. Restwärme des Entspannungsprozesses nach der Niederdruckturbine kann der dem Druckspeicher entnommenen Druckluft vermittels Wärmetauschern vor und nach der Wärmeaufnahme aus dem Wärmespeicher über eine Leitung zugeführt werden.

### Aufgabe der Erfindung

Der Erfindung liegt die Aufgabe zugrunde, ein Verfahren zum Betrieb eines adiabatischen Druckluftspeicherkraftwerks zu entwickeln, welches ausgehend vom Stand der Technik den Wirkungsgrad eines adiabatischen Druckluftspeicherkraftwerks verbessert und welches darüber hinaus mit einfachen Mitteln kostengünstig verwirklicht werden kann, sowie ein zur Durchführung eines solchen Verfahrens geeignetes adiabatisches Druckluftspeicherkraftwerk zur Verfügung zu stellen.

### Darstellung der Erfindung

Die Aufgabe wird jeweils gelöst mit den Merkmalen der unabhängigen Ansprüche.

Ein erster Gegenstand der Erfindung betrifft demnach ein Verfahren zum Betrieb eines
- mindestens eine Turbomaschine zum Verdichten und/oder Entspannen von Druckluft unter Verbrauch bzw. Erzeugung mechanischer Energie,
- zumindest einen zeitweilig mit mindestens einer Turbomaschine während des Verdichtens von Druckluft mechanisch gekoppelten Antriebsmotor zur Erzeugung von während des Verdichtens von Druckluft verbrauchter bzw. benötigter mechanischer Energie,
- mindestens einen zeitweilig mit mindestens einer Turbomaschine während des Entspannens von Druckluft mechanisch gekoppelten Generator zur Umwandlung von während des Entspannens von Druckluft erzeugter mechanischer Energie in Elektrizität,
- mindestens einen zumindest zeitweilig mit mindestens einer Turbomaschine kommunizierenden Druckspeicher zur Zwischenspeicherung verdichteter Druckluft, sowie
- mindestens einen beispielsweise zumindest zeitweilig mit mindestens einer Turbomaschine und dem Druckspeicher kommunizierenden Wärmespeicher zur Entnahme und Speicherung von während des Verdichtens der Druckluft entstehender Wärme und deren Wiederabgabe während des Entspannens der Druckluft, mit einem beispielsweise von einem einen bevorzugt vorgespannten Betonmantel aufweisenden Druckbehälter umgebenen, Wärmespeichermittel beherbergenden Wärmespeicherraum,
umfassenden adiabatischen Druckluftspeicherkraftwerks.

Das Verfahren sieht vor, während des Entspannens der Druckluft einen zeitlich veränderlichen, beispielsweise ständig abnehmenden ersten Teil von dem Druckluftspeicher entnommener, kalter Druckluft durch einen Bypass am Wärmespeicher vorbeizuführen und mit einem zweiten Teil von dem Druckluftspeicher entnommener Druckluft zu mischen, die vermittels aus dem Wärmespeicher entnommener Wärme erhitzt wurde, beispielsweise indem sie den Wärmespeicher durchströmt hat. Hierdurch wird Mischdruckluft erhalten. Das Verfahren sieht außerdem vor, dass die Mischdruckluft eine konstante Turbomaschineneintrittstemperatur aufweist und die Mischdruckluft anschließend mindestens einer Turbomaschine mittelbar oder unmittelbar zum Entspannen zugeführt wird, beispielsweise zumindest so lange bis die Temperatur des zweiten Teils von dem Druckluftspeicher entnommener Druckluft die konstante Turbomaschineneintrittstemperatur unterschreitet.

Zur Verlängerung des isothermen Betriebs der Turbomaschine mit konstanter Turbomaschineneintrittstemperatur während des Entspannens und/oder zur Erhöhung der Turbomaschineneintrittstemperatur kann nach der Entnahme der Druckluft aus dem Druckluftspeicher und vor dem Entspannen der Druckluft in einer Turbomaschine eine zusätzliche Wärmezufuhr beispielsweise durch Verbrennung vorgesehen sein.

Beispielsweise kann ein Brennstoff der Mischdruckluft beigemengt und vor dem Entspannen, also noch vor dem Eintritt in die Turbomaschine, beispielsweise in einer Brennkammer entzündet und verbrannt werden. Die dann teilweise als Wärmekraftmaschine in Form einer Gasturbine arbeitende Turbomaschine kann durch eine zeitlich veränderliche Beimengung von Brennstoff bis zur vollständigen oder wirtschaftlich vertretbaren Entleerung des Druckluftspeichers bei konstanter Temperatur betrieben werden. Durch die höhere Eintrittstemperatur gibt die Turbomaschine eine höhere Wellenleistung ab, die vollständig zur Elektrizitätserzeugung oder zumindest teilweise für andere Zwecke eingesetzt werden kann, wie etwa für eine nachfolgend noch beschriebene Vorverdichtung.

Hierbei kann vorgesehen sein, zunächst gar keinen, oder einen für eine bestimmte, über der konstanten Temperatur der Mischdruckluft liegende Turbomaschineneintrittstemperatur erforderlichen Teil von Brennstoff der Mischdruckluft konstanter Temperatur beizumengen, zu entzünden und zu verbrennen. Unterschreitet die Mischdruckluft die konstante Temperatur kann ein zeitlich ständig zunehmender Teil von Brennstoff der Mischdruckluft beigemengt und zu verbrannt werden, bis der Druck im Druckluftspeicher einen Mindestwert für den Eingangsdruck der Turbomaschine unterschreitet, wodurch der Entladebetrieb des Druckluftspeicherkraftwerks und damit der Entspannungszyklus endet.

Alternativ oder zusätzlich kann die Verbrennung im ersten Teil der dem Druckluftspeicher entnommenen, kalten Druckluft erfolgen, der nicht vermittels Wärme aus dem Wärmespeicher erhitzt wird. Der erste Teil wird erst anschließend mit dem vermittels Wärme aus dem Wärmespeicher erhitzten zweiten Teil der Druckluft vermischt, um Mischdruckluft konstanter Turbomaschineneintrittstemperatur zu erzeugen. Die konstante Turbomaschineneintrittstemperatur dieser Mischdruckluft kann oberhalb des Temperaturniveaus im Wärmespeicher liegen.

Als Brennstoff eignet sich beispielsweise Erdgas.

Um die Turbomaschine zum Entspannen im Entspannungszyklus zumindest für einen begrenzten Zeitraum während des Entladebetriebs sowohl unter konstanter Turbomaschineneintrittstemperatur, als auch unter konstantem Turbomaschineneintrittsdruck zu betreiben, kann vorgesehen sein, die Druckluft vor dem Entspannen in einer Turbomaschine auf ein gleich bleibendes Druckniveau zu verdichten.

Dies kann beispielsweise durch einen Eingangs beschriebenen isobaen Druckluftspeicher verwirklicht sein. Ein sich durch einen isobaren Druckluftspeicher ergebender Vorteil ist, dass auch die Turbomaschine zum Verdichten unter gleich bleibenden Druck- und Temperaturverhältnissen betrieben werden können.

Ist kein isobarer Druckluftspeicher verfügbar kann vorgesehen sein, mit sinkendem Druck im Druckluftspeicher das Verdichtungsverhältnis zumindest für einen begrenzten Zeitraum während des Entladebetriebs zeitlich ständig anzuheben, so dass mit dem momentanen Verdichtungsverhältnis ausgehend vom momentanen Druck im Druckluftspeicher das gleich bleibende Druckniveau des konstanten Turbomaschineneintrittsdrucks zumindest für einen begrenzten Zeitraum während des Entladebetriebs erreicht wird.

In beiden Fällen kann die Mischdruckluft beispielsweise vor der Beimengung eines Brennstoffs und vor der Entzündung und Verbrennung des Mischdruckluft-Brennstoff-Gemischs auf ein gleich bleibendes Druckniveau verdichtet werden.

Um dieses Ziel zu erreichen kann alternativ vorgesehen sein, vor der Wärmezufuhr die aus dem Druckluftspeicher entnommene Druckluft durch ein variables Verdichtungsverhältnis auf ein konstantes Druckniveau zu verdichten, unabhängig davon, ob die Wärmezufuhr an aus dem Druckluftspeicher entnommene kalte Druckluft durch Erhitzung wenigstens eines Teils der Druckluft mittels Wärme aus dem Wärmespeicher und/oder durch Verbrennung mittels Brennstoffzufuhr und Entzündung vorgesehen ist. Dieses konstante Druckniveau kann beispielsweise dem Druck im Druckluftspeicher bei Beginn des Entladebetriebs entsprechen, oder es kann oberhalb diesen Drucks liegen.

Hierzu kann der in Strömungsrichtung gesehen vor der Turbomaschine zum Entspannen liegenden Brennkammer eine Turbomaschine mit veränderlichem Verdichtungsverhältnis vorgeschaltet sein.

Das veränderliche Druckverhältnis kann beispielsweise hergestellt sein durch eine mechanische Kopplung vermittels eines stufenlos veränderlichen Übersetzungsverhältnisses zwischen der als Turbine ausgeführten Turbomaschine zum Entspannen und der als Verdichter ausgeführten Turbomaschine mit veränderlichem Verdichtungsverhältnis. Alternativ oder zusätzlich kann ein Verdichter mit verstellbaren Rotorschaufeln vorgesehen sein. Beispielsweise kann hierzu auch eine veränderliche Anzahl von Verdichterstufen beteiligt sein, um das veränderliche Verdichtungsverhältnis zu verwirklichen.

Mit anderen Worten kann der Turbomaschine zum Entspannen und der Brennkammer ein Gleichdrucklader vorgeschaltet sein, der beispielsweise mit Hilfe eines Teils der von der Turbomaschine zum Entspannen erzeugten mechanischen Energie angetrieben sein kann.

Da der Druck im Druckluftspeicher ebenso wie die Temperatur im Wärmespeicher während des Entladebetriebs stetig sinkt, trägt der für den Antrieb der zunehmenden Vorverdichtung benötigte Brennstoffeinsatz durch die mit zunehmendem Verdichtungsverhältnis steigende Temperatur vor Verbrennung weitestgehend zum Erhalt der für eine konstante Turbomaschineneintrittstemperatur benötigten Energiezufuhr in die Druckluft bei. Hierdurch muss nur ein geringer Anteil an Brennstoff ausschließlich für die direkte Wärmezufuhr zur Temperaturerhöhung aufgewendet werden, was eine günstige Energiebilanz und einen im Vergleich zu einem konventionellen Druckluftspeicherkraftwerk deutlich erhöhten Gesamtwirkungsgrad zur Folge hat.

Diese Energiebilanz wird nochmals erhöht durch den so erhaltenen konstanten Turbomaschineneintrittsdruck und die ebenfalls damit erhaltene konstante Turbomaschineneintrittstemperatur, wodurch die Turbomaschine zum Entspannen auf gleich bleibende Bedingungen im Entladebetrieb ausgelegt werden kann.

Eine denkbare Ausgestaltung ergibt sich durch eine veränderliche Verdichtung der dem Druckluftspeicher entnommenen Druckluft auf einen konstanten Turbomaschineneintrittsdruck noch vor Erhitzung zumindest eines Teils der Druckluft vermittels aus dem Wärmespeicher entnommener Wärme. Das Verfahren sieht hierbei des weiteren vor, einen zeitlich veränderlichen ersten Teil von dem Druckluftspeicher entnommener und auf konstanten Turbomaschineneintrittsdruck verdichteter Druckluft, beispielsweise einen ständig zunehmenden Teil, durch einen Bypass mit einer Brennkammer unter Beimengung von Brennstoff, Entzündung und Verbrennung des Druckluft-Brennstoff-Gemischs am Wärmespeicher vorbeizuführen und mit einem zweiten Teil von dem Druckluftspeicher entnommener und auf konstanten Turbomaschineneintrittsdruck verdichteter Druckluft zu mischen, die vermittels aus dem Wärmespeicher entnommener Wärme erhitzt wurde, beispielsweise indem sie den Wärmespeicher durchströmt hat, und so Mischdruckluft konstanter Turbomaschineneintrittstemperatur und konstantem Turbomaschineneintrittsdruck zu erzeugen, welche anschließend mindestens einer Turbomaschine mittelbar oder unmittelbar zum Entspannen zugeführt wird.

Auch hier kann die notwendige Energie für die veränderliche Verdichtung von der Turbomaschine zur Entspannung vorzugsweise mechanisch zur Verfügung gestellt werden.

Wichtig ist hervorzuheben, dass ein derartiges mit einer unterstützenden Verbrennung betriebenes Druckluftspeicherkraftwerk nach wie vor als adiabatisches Druckluftspeicherkraftwerk im Sinne der Eingangs bereitgestellten Definition bezeichnet werden kann, da es im Gegensatz zu einem konventionellen Druckluftspeicherkraftwerk einen Gesamtwirkungsgrad aufweist, der näher an der adiabaitschen Zustandsänderung liegt, als bei einem konventionellen Druckluftspeicherkraftwerk. Die Verwendung dieser Bezeichnung ist insbesondere aufgrund des Wärmespeichers berechtigt, welcher zumindest einen Teil der bei der Verdichtung entstehenden Wärme zwischenspeichert und bei der Entspannung wieder an die Druckluft abgibt.

Eine vorteilhafte Ausgestaltung des Verfahrens sieht darüber hinaus vor, Restwärme, die nach dem Entspannen noch in der aus der hierfür vorgesehenen Turbomaschine austretenden Luft enthalten ist, der aus dem Druckluftspeicher entnommenen und noch kalten Druckluft beispielsweise mittels eines Rekuperators zuzuführen.

Darüber hinaus kann vorgesehen sein, Umgebungswärme ebenfalls zur Vorwärmung der dem Druckluftspeicher entnommenen und noch kalten Druckluft noch vor der Erhitzung vermittels Wärme aus dem Wärmespeicher und/oder Temperaturerhöhung durch Verbrennung beispielsweise mittels eines Wärmetauschers und/oder einer Wärmepumpe zuzuführen.

Ein zweiter Gegenstand der Erfindung betrifft ein adiabatisches Druckluftspeicherkraftwerk umfassend:
- mindestens eine Turbomaschine zum Verdichten und/oder Entspannen von Druckluft unter Verbrauch bzw. Erzeugung mechanischer Energie,
- zumindest einen zeitweilig mit mindestens einer Turbomaschine während des Verdichtens von Druckluft mechanisch gekoppelten Antriebsmotor zur Erzeugung von während des Verdichtens von Druckluft verbrauchter bzw. benötigter mechanischer Energie,
- mindestens einen zeitweilig mit mindestens einer Turbomaschine während des Entspannens von Druckluft mechanisch gekoppelten Generator zur Umwandlung von während des Entspannens von Druckluft erzeugter mechanischer Energie in Elektrizität,
- mindestens einen zumindest zeitweilig mit mindestens einer Turbomaschine kommunizierenden Druckspeicher zur Zwischenspeicherung verdichteter Druckluft, sowie
- mindestens einen beispielsweise zumindest zeitweilig mit mindestens einer Turbomaschine und dem Druckspeicher kommunizierenden Wärmespeicher zur Entnahme und Speicherung von während des Verdichtens der Druckluft entstehender Wärme und deren Wiederabgabe während des Entspannens der Druckluft, mit einem beispielsweise von einem einen bevorzugt vorgespannten Betonmantel aufweisenden Druckbehälter umgebenen, Wärmespeichermittel beherbergenden Wärmespeicherraum.

Das adiabatische Druckluftspeicherkraftwerk verfügt außerdem über Mittel zur Erzeugung einer konstanten Turbomaschineneintrittstemperatur von dem Druckluftspeicher entnommener Druckluft während des Entspannens.

Die Mittel zur Erzeugung einer konstanten Turbomaschineneintrittstemperatur umfassen einen zwischen Druckluftspeicher und Turbomaschine zum Entspannen von Druckluft angeordneten, regelbaren Bypass, so dass während des Entladebetriebs ein veränderlicher, vorzugsweise ein zeitlich zunehmender Teil der dem Druckluftspeicher entnommenen Druckluft vermittels Wärme aus dem Wärmespeicher erwärmt und mit dem Druckluftspeicher entnommenen Druckluft, die durch den regelbaren Bypass geströmt ist, zu Mischdruckluft konstanter Turbomaschineneintrittstemperatur vermischt wird.

Der Bypass kann eine regelbare Brennkammer umfassen, in welcher dem Druckluftspeicher entnommener Druckluft ein zeitlich veränderlicher Teil Brennstoff beigemengt und das dadurch entstehende Druckluft-BrennstoffGemisch entzündet und verbrannt wird, bevor es mit vermittels Wärme aus dem Wärmespeicher erwärmter, dem Druckluftspeicher entnommenen Druckluft zu Mischdruckluft konstanter Turbomaschineneintrittstemperatur vermischt wird.

Das adiabatische Druckluftspeicherkraftwerk kann darüber hinaus ein oder mehrere Mittel zur Umsetzung von bereits zum vorher beschriebenen Verfahren näher erläuterten Ausgestaltungsvarianten aufweisen, wie beispielsweise einem dem Bypass vor- oder nachgeschalteten Verdichter mit veränderlichem Verdichtungsverhältnis, einer wahlweise mechanischen Kopplung eines solchen Verdichters mit einer Turbomaschine zum Entspannen von Druckluft, eine zwischen einem gegebenenfalls vorgesehenen Verdichter mit veränderlichem Verdichtungsverhältnis und der Turbomaschine zum Entspannen von Druckluft vorgesehenen Brennkammer, sowie Kombinationen hiervon, um nur einige Mittel zu nennen.

Der eine Turbomaschine zum Verdichten von Druckluft antreibende Antriebsmotor und der von einer Turbomaschine zum Entspannen von Druckluft angetriebene Generator können durch ein und die selbe elektrische Maschine verwirklicht sein.

Durch den regelbaren Bypass ist das adiabatische Druckluftspeicherkraftwerk in der Lage, Mischdruckluft konstanter Temperatur der oder den zur Entspannung der Druckluft vorgesehenen Turbomaschinen zuzuführen. Hierdurch wird im Vergleich zum Stand der Technik eine Steigerung des Gesamtwirkungsgrads eines einen Wärmespeicher mit einem regelbaren Bypass umfassenden adiabatischen Druckluftspeicherkraftwerks erhalten.

Hierdurch wird zwar kein isothermer Wärmespeicher erhalten, jedoch eine Zufuhr isothermer Mischdruckluft mit konstanter Turbomaschineneintrittstemperatur zu der oder den zur Entspannung der Druckluft vorgesehenen Turbomaschinen.

Sollte der Wärmespeicher beispielsweise aufgrund einer zu lange anhaltenden Speicherperiode nicht ausreichend Wärme zur vollständigen oder wirtschaftlich vertretbaren Entladung des Druckluftspeichers enthalten und/oder kann bei einem höheren Temperaturniveau der der oder den zur Entspannung der Druckluft vorgesehenen Turbomaschinen zuzuführenden Druckluft ein signifikant höherer Wirkungsgrad erzielt werden, kann zwischen der Turbomaschine und dem Wärmespeicher mit dem parallel angeordneten, regelbaren Bypass eine Brennkammer vorgesehen sein, in welcher der vorgewärmten Mischdruckluft ein Brennstoff, beispielsweise Erdgas beigemengt und das Brennstoff-Mischdruckluft-Gemisch entzündet wird und das dabei entstehende Verbrennungsprodukt in die Turbomaschine eintritt.

Um der oder den zur Entspannung der Druckluft vorgesehenen Turbomaschinen nicht nur Mischdruckluft konstanter Turbomaschineneintrittstemperatur, sondern auch konstanten Turbomaschineneintrittsdrucks zuzuführen, kann das adiabatische Druckluftspeicherkraftwerk alternativ oder zusätzlich einen einleitend beschriebenen isobaren Druckluftspeicher umfassen. Hierdurch wird eine weitere Wirkungsgradsteigerung erreicht.

Wichtig ist hervorzuheben, dass der Begriff Druckluft hierbei keine Einschränkung auf komprimierte Luft darstellt, sondern stellvertretend für unter Druck stehende, zumindest innerhalb des im Betrieb eines adiabatischen Druckluftspeicherkraftwerks auftretenden Temperaturbereichs gasförmige Fluide ist.

### Kurzbeschreibung der Zeichnungen

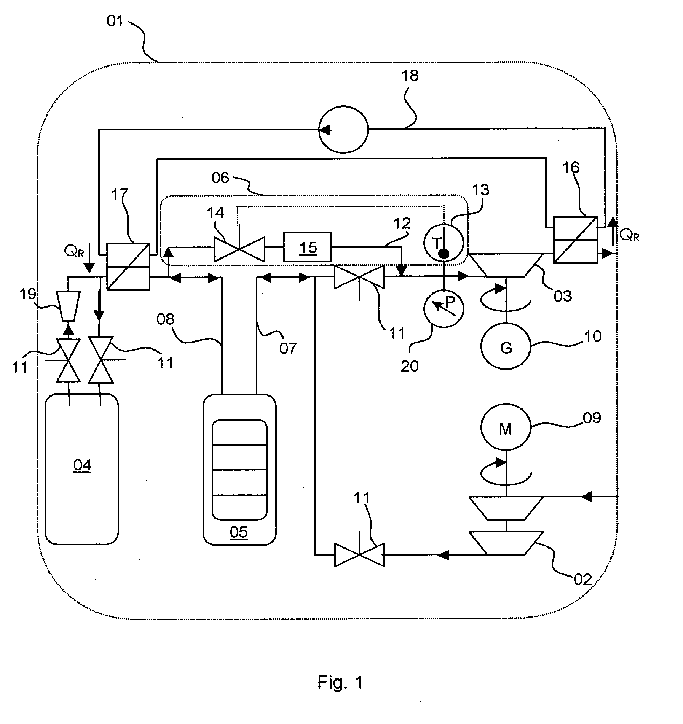

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber können nur Bezugszeichen in den einzelnen Zeichnungen dargestellt sein, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Die einzige Zeichnung Fig. 1 zeigt in schematischer Darstellung ein erfindungsgemäßes adiabatisches Druckluftspeicherkraftwerk.

### Ausführliche Beschreibung der bevorzugten Ausführungsbeispiele

Ein in Fig. 1 dargestelltes adiabatisches Druckluftspeicherkraftwerk 01 weist im Wesentlichen
- mindestens eine Turbomaschine 02 zum Verdichten von Druckluft unter Verbrauch mechanischer Energie,
- mindestens eine Turbomaschine 03 zum Entspannen von Druckluft unter Erzeugung mechanischer Energie,
- mindestens einen zumindest zeitweilig beispielsweise abwechselnd, jedoch nicht gleichzeitig mit mindestens einer Turbomaschine 02 zum Verdichten von Druckluft und mit mindestens einer Turbomaschine 03 zum Entspannen von Druckluft kommunizierenden Druckspeicher 04 zur Zwischenspeicherung verdichteter Druckluft,
- mindestens einen Wärmespeicher 05 zur Entnahme und Speicherung von während des Verdichtens der Druckluft entstehender Wärme und deren Wiederabgabe an die Druckluft während des Entspannens der Druckluft, sowie
- Mittel 06 zur Erzeugung einer konstanten Turbomaschineneintrittstemperatur T von dem Druckluftspeicher 04 entnommener Druckluft während des Entspannens.

Bei der Turbomaschineneintrittstemperatur T handelt es sich dabei um die Temperatur, welche während des Entspannens von dem Druckluftspeicher 04 entnommener Druckluft am Eingang der hierfür vorgesehenen Turbomaschine 03 noch vor dem in dieser stattfindenden Entspannungsprozess herrscht.

Der Wärmespeicher steht dabei mit einer ersten Zu- und/oder Abführungsleitung 07 während des Aufladens mit der Turbomaschine 02 zum Verdichten von Druckluft und während des Entladens mit der Turbomaschine 03 zum Entspannen von Druckluft in Verbindung bzw. ist über die erste Zu- und/oder Abführungsleitung 07 wahlweise mit einer der genannten Turbomaschinen 02, 03 in Verbindung bringbar.

Eine zweite Zu- und/oder Abführungsleitung 08 verbindet zumindest zeitweilig, zumindest jedoch während des durch das Verdichten von Druckluft unter Zwischenspeicherung der dabei entstehenden Wärme im Wärmespeicher 05 und unter Speicherung der verdichteten Druckluft im Druckluftspeicher 04 gekennzeichneten Aufladebetriebs, sowie während des durch das Entspannen von Druckluft unter Verbrauch von im Wärmespeicher 05 gespeicherter Wärme und unter Entnehme der verdichteten Druckluft aus dem Druckluftspeicher 04 gekennzeichneten Entladebetriebs des adiabatischen Druckluftspeicherkraftwerks 01 den Wärmespeicher 05 mit dem beispielsweise unterhalb des Erdbodens angeordneten Druckluftspeicher 04.

Die genannten Turbomaschinen 02, 03 können ein oder mehrstufig ausgeführt sein, wie für die Turbomaschine 02 angedeutet. Grundsätzlich ist denkbar, eine einzige Turbomaschine 02, 03 für beide genannten Zwecke vorzusehen, welche in entgegengesetzten Richtungen durchströmt werden kann, in einer ersten Richtung um Druckluft zu verdichten und in einer zweiten, entgegengesetzten Richtung, um Druckluft zu entspannen.

Das adiabatische Druckluftspeicherkraftwerk 01 umfasst zusätzlich zumindest einen zeitweilig mit der Turbomaschine 02 während des Verdichtens von Druckluft mechanisch gekoppelten Antriebsmotor 09 zur Bereitstellung der zum Verdichten von der Turbomaschine 02 benötigten mechanischer Energie.

Das adiabatische Druckluftspeicherkraftwerk 01 umfasst außerdem mindestens einen zeitweilig mit der Turbomaschine 03 während des Entspannens von Druckluft mechanisch gekoppelten Generator 10 zur Umwandlung bei der Entspannung der Druckluft von der Turbomaschine 03 erzeugter mechanischer Energie in Elektrizität.

Der Antriebsmotor 09 und der Generator 10 können durch ein und die selbe elektrische Maschine verwirklicht sein.

Diverse, nicht näher bezeichnete Absperrmittel 11 stellen die zeitweilig benötigten strömungs- und/oder wärmetechnischen Verbindungen zwischen den einzelnen Komponenten des adiabatischen Druckluftspeicherkraftwerks 01 her.

Die Mittel 06 zur Erzeugung einer konstanten Turbomaschineneintrittstemperatur T von dem Druckluftspeicher 04 entnommener Druckluft während des Entspannens können einen Bypass 12 umfassen, mittels dem ein erster Teil von dem Druckluftspeicher 04 entnommener Druckluft am Wärmespeicher 05 vorbei geleitet und anschließend mit einem vermittels Wärme aus dem Wärmespeicher 05 erhitzten zweiten Teil von dem Druckluftspeicher 04 entnommener Druckluft gemischt werden kann, wodurch Mischdruckluft konstanter Turbomaschineneintrittstemperatur T erzeugt wird, welche anschließend der Turbomaschine 03 zum Entspannen zugeführt wird.

Um eine konstante Turbomaschineneintrittstemperatur T einzustellen, können die Mittel 06 zur Erzeugung einer konstanten Turbomaschineneintrittstemperatur T von dem Druckluftspeicher 04 entnommener Druckluft während des Entspannens einen Temperaturfühler 13 umfassen, sowie mindestens ein regelbares Ventil 14, dessen Öffnen und Schließen wie in Fig. 1 gestrichelt angedeutet anhand eines Ausgangssignals des Temperaturfühlers 13 geregelt wird, um den Durchfluss des ersten Teils von dem Druckluftspeicher 04 entnommener Druckluft durch den Bypass 12 so einzustellen, dass sich durch Mischen mit dem vermittels Wärme aus dem Wärmespeicher erhitzten zweiten Teil von dem Druckluftspeicher 04 entnommener Druckluft die erwünschte konstante Turbomaschineneintrittstemperatur T einstellt.

Ist beispielsweise eine hohe, konstante Turbomaschineneintrittstemperatur T gefordert, die beispielsweise über dem maximalen Temperaturniveau im Wärmespeicher 04 liegt, können die Mittel 06 zur Erzeugung einer konstanten Turbomaschineneintrittstemperatur T von dem Druckluftspeicher 04 entnommener Druckluft eine Brennkammer 15 umfassen, in der Brennstoff zugeführt, beispielsweise eingespritzt oder eingeblasen, anschließend entzündet und verbrannt wird. Die Verbrennung besorgt eine Wärmezufuhr nach der Entnahme der Druckluft aus dem Druckluftspeicher 04 und vor dem Entspannen in der hierfür vorgesehenen Turbomaschine 03. Eine solche Brennkammer 15 kann beispielsweise wie in Fig. 1 dargestellt in dem Bypass 12 vorgesehen sein.

Darüber hinaus kann das Druckluftspeicherkraftwerk 01 einen Rekuperator umfassend beispielsweise zwei über einen Wärmeträgermittelkreislauf 18 miteinander verbundenen Wärmetauscher 16, 17 aufweisen, mit dem noch in der Luft nach dem Entspannen enthaltene Restwärme Q_{R} aus dem Druckluftspeicher 04 entnommener und noch kalter Druckluft zugeführt wird.

Das adiabatische Druckluftspeicherkraftwerk 01 kann außerdem einen Verdichter 19 umfassen, mittels dem neben der konstanten Turbomaschineneintrittstemperatur T auch noch ein konstanter Turbomaschineneintrittsdruck P während des Entspannens hergestellt werden kann.

Beim Turbomaschineneintrittsdruck P handelt es sich dabei um den Druck, welcher während des Entspannens von dem Druckluftspeicher 04 entnommener Druckluft am Eingang der hierfür vorgesehenen Turbomaschine 03 noch vor dem in dieser stattfindenden Entspannungsprozess in der Mischdruckluft herrscht.

Der Turbomaschineneintrittsdruck P kann beispielsweise mittels eines Druckmessgeräts 20 vor dem Eintritt in die Turbomaschine 03 zum Entspannen überwacht und der Verdichter 19 entsprechend geregelt werden.

Das adiabatische Druckluftspeicherkraftwerk 01 erlaubt die Durchführung eines Verfahrens zum Betrieb eines adiabatischen Druckluftspeicherkraftwerks 01 mit:
- mindestens einer Turbomaschine 02, 03 zum Verdichten und/oder Entspannen von Druckluft,
- mindestens einen zumindest zeitweilig mit mindestens einer Turbomaschine 02, 03 kommunizierenden Druckspeicher 04 zur Zwischenspeicherung verdichteter Druckluft, sowie
- mindestens einen Wärmespeicher 05 zur Entnahme und Speicherung von während des Verdichtens der Druckluft entstehender Wärme und deren Wiederabgabe während des Entspannens der Druckluft,
   bei dem während des Entspannens der Druckluft ein erster Teil von dem Druckluftspeicher 04 entnommener Druckluft mit einem vermittels Wärme aus dem Wärmespeicher 05 erhitzten zweiten Teil von dem Druckluftspeicher 04 entnommener Druckluft gemischt wird, wodurch Mischdruckluft konstanter Turbomaschineneintrittstemperatur T erzeugt wird, welche anschließend mindestens einer Turbomaschine 03 zum Entspannen zugeführt wird.

Darüber hinaus erlaubt das mit einer Brennkammer 15 ausgestattete adiabatische Druckluftspeicherkraftwerk 01 die Durchführung eines Verfahrens, bei dem zusätzlich vorgesehen sein kann, dass nach der Entnahme der Druckluft aus dem Druckluftspeicher 04 und vor dem Entspannen in einer Turbomaschine 03 eine zusätzliche Wärmezufuhr durch Verbrennung vorgesehen ist. Hierdurch kann die konstante Turbomaschineneintrittstemperatur T im Vergleich zu einer Ausführung ohne Brennkammer 15 höher gewählt werden und/oder der Entladebetrieb des adiabatischen Druckluftspeicherkraftwerks 01 länger anhalten, da bis zur vollständigen Entleerung des Druckluftspeichers 04 die konstante Turbomaschineneintrittstemperatur T aufrecht erhalten werden kann. Dies ist insbesondere dann von Bedeutung, wenn das adiabatische Druckluftspeicherkraftwerk 01 lange im Speicherbetrieb lag, bei dem der Druckluftspeicher 04 zumindest zum Teil gefüllt ist, aber weder eine Verdichtung, noch eine Entspannung vorgenommen wird. Dabei kann sich der Wärmespeicher durch Wärmeverluste und/oder erforderliche Kühlmaßnahmen so weit abkühlen, dass eine Entleerung des Druckluftspeichers nur unter Verwendung von Wärme aus dem Wärmespeicher nicht mehr möglich ist. Dank der zusätzlichen Wärmezufuhr vor der Entspannung stellt ein lange anhaltender Speicherbetrieb keine Einschränkung der Verfügbarkeit des adiabatischen Druckluftspeicherkraftwerks 01 dar.

Ferner erlaubt das mit einem Verdichter 19 ausgestattete adiabatische Druckluftspeicherkraftwerk 01 die Durchführung eines Verfahrens, bei dem alternativ oder zusätzlich vorgesehen sein kann, dass vor dem Entspannen in einer Turbomaschine 02 eine Verdichtung der Druckluft auf einen gleich bleibenden Turbomaschineneintrittsdruck P vorgesehen ist. Der Verdichter 19 kann elektrisch und/oder beispielsweise mittels Wellenleistung der Turbomaschine 03 zum Entspannen von Druckluft mechanisch angetrieben sein.

Beispielsweise kann der ein mit abnehmenden Druck im Druckluftspeicher zunehmendes Verdichtungsverhältnis besorgende Verdichter 19 als Radialverdichter ausgeführt sein. Diese nutzen die Massenträgheit der Luft und weisen einen weitgehend konstanten Wirkungsgrad auf, der unabhängig vom Verdichtungsverhältnis ist. Darüber hinaus können sie in einem weiten Drehzahlbereich eingesetzt werden, wobei deren Verdichtungsverhältnis proportional der Drehzahl ist.

Dabei kann vorgesehen sein, wie in Fig. 1 angedeutet, dass die von dem Druckluftspeicher 04 entnommene Druckluft vor der Wärmezufuhr auf ein zum Erhalt des konstanten Turbomaschineneintrittsdrucks P gleich bleibendes Druckniveau verdichtet wird, oder dass die Mischdruckluft nach der Wärmezufuhr auf ein dem konstanten Turbomaschineneintrittsdrucks P entsprechendes Druckniveau verdichtet wird.

Vermittels des Wärmeträgermittelkreislaufs 18 kann darüber hinaus ein Verfahren verwirklicht werden, bei dem zusätzlich noch in der Luft nach dem Entspannen enthaltene Restwärme der aus dem Druckluftspeicher 04 entnommenen und noch kalten Druckluft zugeführt wird. Gegebenenfalls kann hierbei noch eine Wärmepumpe in den Wärmeträgermittelkreislauf 18 integriert sein, um ein höheres Temperaturniveau zu erhalten.

Bei einer alternativen oder zusätzlichen Verbindung des Wärmeträgermittelkreislaufs 18 mit der Umgebung gegebenenfalls unter Zwischenschaltung einer Wärmepumpe kann Umgebungswärme der aus dem Druckluftspeicher 04 entnommenen und noch kalten Druckluft zugeführt werden.

Die Erfindung ist insbesondere im Bereich der Herstellung, des Aufbaus und des Betriebs von adiabatischen Druckluftspeicherkraftwerken gewerblich anwendbar.

### Bezugszeichenliste

- 01: adiabatisches Druckluftspeicherkraftwerk
- 02: Turbomaschine zum Verdichten
- 03: Turbomaschine zum Entspannen
- 04: Druckluftspeicher
- 05: Wärmespeicher
- 06: Mittel
- 07: erste Zu- und/oder Abführungsleitung
- 08: zweite Zu- und/oder Abführungsleitung
- 09: Antriebsmotor
- 10: Generator
- 11: Absperrmittel
- 12: Bypass
- 13: Temperaturfühler
- 14: Ventil
- 15: Brennkammer
- 16: Wärmetauscher
- 17: Wärmetauscher
- 18: Wärmeträgermittelkreislauf
- 19: Verdichter
- 20: Druckmessgerät

- T: Turbomaschineneintrittstemperatur
- P: Turbomaschineneintrittsdruck
- Q_{R}: Restwärme

## Patentansprüche

1. Verfahren zum Betrieb eines adiabatischen Druckluftspeicherkraftwerks (01) umfassend:
- mindestens eine Turbomaschine (02) zum Verdichten von Druckluft,
- mindestens eine Turbomaschine (03) zum Entspannen von Druckluft,
- mindestens einen zumindest zeitweilig, jedoch nicht gleichzeitig mit mindestens einer Turbomaschine (02) zum Verdichten von Druckluft und mit mindestens einer Turbomaschine (03) zum Entspannen von Druckluft kommunizierenden Druckspeicher (04) zur Zwischenspeicherung verdichteter Druckluft,
- mindestens einen Wärmespeicher (05), sowie
- einen Bypass (12), mittels dem während des Entspannens ein erster Teil von dem Druckluftspeicher (04) entnommener Druckluft am Wärmespeicher 05 vorbei geleitet und anschließend mit einem vermittels Wärme aus dem Wärmespeicher (05) erhitzten zweiten Teil von dem Druckluftspeicher (04) entnommener Druckluft zu Mischdruckluft gemischt werden kann,
- welche Mischdruckluft anschließend mindestens einer Turbomaschine (03) zum Entspannen zugeführt wird,
**dadurch gekennzeichnet, dass**
- der Wärmespeicher (05) zur Entnahme und Speicherung von während des Verdichtens der Druckluft entstehender Wärme und deren Wiederabgabe während des Entspannens der Druckluft vorgesehen ist,
- während des Entspannens der Druckluft ein zeitlich veränderlicher, erster Teil von dem Druckluftspeicher (04) entnommener Druckluft durch den Bypass (12) am Wärmespeicher (05) vorbei geführt und mit einem zweiten Teil von dem Druckluftspeicher (04) entnommener Druckluft, die vermittels aus dem Wärmespeicher (05) entnommener Wärme erhitzt wurde, zu Mischdruckluft konstanter Turbomaschineneintrittstemperatur (T) gemischt wird.

2. Verfahren nach Anspruch 1,
**dadurch gekennzeichnet,**
**dass** nach der Entnahme der Druckluft aus dem Druckluftspeicher (04) und vor dem Entspannen in einer Turbomaschine (03) eine zusätzliche Wärmezufuhr durch Verbrennung vorgesehen ist.

3. Verfahren nach Anspruch 2,
**dadurch gekennzeichnet,**
**dass** zur zusätzlichen Wärmezufuhr ein Brennstoff der Mischdruckluft beigemengt und vor dem Entspannen entzündet und verbrannt wird.

4. Verfahren nach Anspruch 2 oder 3,
**dadurch gekennzeichnet,**
**dass** zur zusätzlichen Wärmezufuhr dem ersten Teil von dem Druckluftspeicher entnommener Druckluft ein Brennstoff beigemengt, entzündet und verbrannt wird, und der so erhitzte erste Teil anschließend mit dem vermittels Wärme aus dem Wärmespeicher erhitzten zweiten Teil von dem Druckluftspeicher (04) entnommener Druckluft zu Mischdruckluft konstanter Turbomaschineneintrittstemperatur (T) gemischt wird.

5. Verfahren nach einem der vorhergehenden Ansprüche,
**dadurch gekennzeichnet,**
**dass** durch Verwendung eines isobaren Druckluftspeichers (04) vor dem Entspannen in einer Turbomaschine (03) eine Verdichtung der Druckluft auf einen konstanten Turbomaschineneintrittsdruck (P) vorgesehen ist.

6. Verfahren nach einem der Ansprüche 1 bis 4,
**dadurch gekennzeichnet,**
**dass** durch Verwendung einer Strömungsmaschine mit veränderlichem Verdichtungsverhältnis die aus dem Druckluftspeicher entnommene Druckluft auf konstanten Turbomaschineneintrittsdruck (P) verdichtet wird.

7. Verfahren nach einem der vorhergehenden Ansprüche,
**gekennzeichnet durch**
eine Turbomaschine (02, 03) für das Verdichten und das Entspannen von Druckluft.

8. Verfahren nach einem der vorhergehenden Ansprüche,
**dadurch gekennzeichnet,**
**dass** noch in der Luft nach dem Entspannen enthaltene Restwärme (Q_{R}) der aus dem Druckluftspeicher (04) entnommenen und noch kalten Druckluft zugeführt wird.

9. Verfahren nach einem der vorhergehenden Ansprüche,
**dadurch gekennzeichnet,**
**dass** Umgebungswärme der aus dem Druckluftspeicher (04) entnommenen und noch kalten Druckluft zugeführt wird.

10. Adiabatisches Druckluftspeicherkraftwerk (01) umfassend:
- mindestens eine Turbomaschine (02) zum Verdichten von Druckluft,
- mindestens eine Turbomaschine (03) zum Entspannen von Druckluft,
- mindestens einen zumindest zeitweilig, jedoch nicht gleichzeitig mit mindestens einer Turbomaschine (02) zum Verdichten von Druckluft und mit mindestens einer Turbomaschine (03) zum Entspannen von Druckluft kommunizierenden Druckspeicher (04) zur Zwischenspeicherung verdichteter Druckluft,
- mindestens einen Wärmespeicher (05), sowie
- einen Bypass (12), mittels dem während des Entspannens ein erster Teil von dem Druckluftspeicher (04) entnommener Druckluft am Wärmespeicher (05) vorbei geleitet und anschließend mit einem vermittels Wärme aus dem Wärmespeicher (05) erhitzten zweiten Teil von dem Druckluftspeicher (04) entnommener Druckluft zu Mischdruckluft gemischt werden kann,
- welche Mischdruckluft anschließend mindestens einer Turbomaschine (03) zum Entspannen zugeführt wird,
**dadurch gekennzeichnet, dass**
- der Wärmespeicher (05) mit einer ersten Zu- und/oder Abführungsleitung (07) während des Aufladens mit der Turbomaschine (02) zum Verdichten von Druckluft und während des Entladens mit der Turbomaschine (03) zum Entspannen von Druckluft in Verbindung steht,
- eine zweite Zu- und/oder Abführungsleitung (08) zumindest während des durch das Verdichten von Druckluft unter Zwischenspeicherung der dabei entstehenden Wärme im Wärmespeicher (05) und unter Speicherung der verdichteten Druckluft im Druckluftspeicher (04) gekennzeichneten Aufladebetriebs, sowie während des durch das Entspannen von Druckluft unter Verbrauch von im Wärmespeicher (05) gespeicherter Wärme und unter Entnehme der verdichteten Druckluft aus dem Druckluftspeicher (04) gekennzeichneten Entladebetriebs des adiabatischen Druckluftspeicherkraftwerks (01) den Wärmespeicher (05) mit dem Druckluftspeicher (04) verbindet, und
- der Bypass (12) derart regelbar ist, dass während des Entspannens der Druckluft ein zeitlich veränderlicher, erster Teil von dem Druckluftspeicher (04) entnommener Druckluft durch den Bypass (12) am Wärmespeicher (05) vorbei geführt und mit einem zweiten Teil von dem Druckluftspeicher (04) entnommener Druckluft, die vermittels aus dem Wärmespeicher (05) entnommener Wärme erhitzt wurde, zu Mischdruckluft konstanter Turbomaschineneintrittstemperatur (T) gemischt wird.

11. Adiabatisches Druckluftspeicherkraftwerk nach Anspruch 10,
**gekennzeichnet durch**
eine Turbomaschine (02, 03) für das Verdichten und das Entspannen von Druckluft.

## Claims

1. Method for operating an adiabatic compressed-air storage power plant (01) comprising:
- at least one turbomachine (02) for compressing compressed air,
- at least one turbomachine (03) for decompressing compressed air,
- at least one pressure store (04) for intermediately storing compressed compressed air that communicates at least temporarily, but not simultaneously, with at least one turbomachine (02) for compressing compressed air and with at least one turbomachine (03) for decompressing compressed air,
- at least one heat store (05), and
- a bypass (12), by means of which, during the decompression, a first part of the compressed air removed from the compressed-air store (04) can be directed past the heat store (05) and subsequently mixed with a second part of the compressed air removed from the compressed-air store (04) that has been heated by means of heat from the heat store (05), to form mixed compressed air,
- which mixed compressed air is subsequently fed to at least one turbomachine (03) for decompression, **characterized in that**
- the heat store (05) is provided for removing and storing heat occurring during the compression of the compressed air and giving it off again during the decompression of the compressed air,
- during the decompression of the compressed air, a first part of the compressed air removed from the compressed-air store (04) that is variable over time is conducted through the bypass (12) past the heat store (05) and is mixed with a second part of the compressed air removed from the compressed-air store (04) that has been heated by means of heat removed from the heat store (05), to form mixed compressed air of a constant turbomachine inlet temperature (T).

2. Method according to Claim 1,
**characterized**
**in that**, after the removal of the compressed air from the compressed-air store (04) and before the decompression in a turbomachine (03), an additional supply of heat is provided by combustion.

3. Method according to Claim 2,
**characterized**
**in that**, for the additional supply of heat, a fuel is admixed with the mixed compressed air and is ignited and burned before the decompression.

4. Method according to Claim 2 or 3,
**characterized**
**in that**, for the additional supply of heat, a fuel is admixed with the first part of compressed air removed from the compressed-air store, ignited and burned, and the first part heated in this way is subsequently mixed with the second part of the compressed air removed from the compressed-air store (04) that has been heated by means of heat from the heat store, to form mixed compressed air of a constant turbomachine inlet temperature (T).

5. Method according to one of the preceding claims,
**characterized**
**in that** compression of the compressed air to a constant turbomachine inlet pressure (P) is provided by using an isobaric compressed-air store (04) before the decompression in a turbomachine (03).

6. Method according to one of Claims 1 to 4,
**characterized**
**in that** the compressed air removed from the compressed-air store is compressed to a constant turbomachine inlet pressure (P) by using a turbomachine with a variable compression ratio.

7. Method according to one of the preceding claims,
**characterized by**
a turbomachine (02, 03) for the compression and decompression of compressed air.

8. Method according to one of the preceding claims,
**characterized**
**in that** residual heat (Q_{R}) still contained in the air after the decompression is supplied to the compressed air that has been removed from the compressed-air store (04) and is still cold.

9. Method according to one of the preceding claims,
**characterized**
**in that** ambient heat is supplied to the compressed air that has been removed from the compressed-air store (04) and is still cold.

10. Adiabatic compressed-air storage power plant (01) comprising:
- at least one turbomachine (02) for compressing compressed air,
- at least one turbomachine (03) for decompressing compressed air,
- at least one pressure store (04) for intermediately storing compressed compressed air that communicates at least temporarily, but not simultaneously, with at least one turbomachine (02) for compressing compressed air and with at least one turbomachine (03) for decompressing compressed air,
- at least one heat store (05), and
- a bypass (12), by means of which, during the decompression, a first part of the compressed air removed from the compressed-air store (04) can be directed past the heat store (05) and subsequently mixed with a second part of the compressed air removed from the compressed-air store (04) that has been heated by means of heat from the heat store (05), to form mixed compressed air,
- which mixed compressed air is subsequently fed to at least one turbomachine (03) for decompression,
**characterized in that**
- by a first feed and/or discharge line (07), the heat store (05) is in connection during the charging with the turbomachine (02) for the compression of compressed air and during the discharging with the turbomachine (03) for the decompression of compressed air,
- a second feed and/or discharge line (08) connects the heat store (05) to the compressed-air store (04) at least during the charging mode, which is **characterized by** the compression of compressed air while intermediately storing the heat thereby produced in the heat store (05) and while storing the compressed compressed air in the compressed-air store (04), and also during the discharging mode, which is **characterized by** the decompression of compressed air while consuming heat stored in the heat store (05) and while removing the compressed compressed air from the compressed-air store (04), and
- the bypass (12) is controllable in such a way that, during the decompression of the compressed air, a first part of the compressed air removed from the compressed-air store (04) that is variable over time is directed past the heat store (05) and mixed with a second part of the compressed air removed from the compressed-air store (04) that has been heated by means of heat removed from the heat store (05), to form mixed compressed air of a constant turbomachine inlet temperature (T).

11. Adiabatic compressed-air storage power plant according to Claim 10,
**characterized by**
a turbomachine (02, 03) for the compression and decompression of compressed air.

## Revendications

1. Procédé pour faire fonctionner une centrale d'accumulation d'air comprimé adiabatique (01), comprenant :
- au moins une turbomachine (02) pour la compression d'air comprimé,
- au moins une turbomachine (03) pour la détente d'air comprimé,
- au moins un accumulateur de pression (04) communiquant au moins temporairement mais pas simultanément avec au moins une turbomachine (02) pour la compression d'air comprimé et avec au moins une turbomachine (03) pour la détente d'air comprimé, pour le stockage intermédiaire d'air comprimé compressé,
- au moins un accumulateur de chaleur (05), et
- une dérivation (12) au moyen de laquelle, pendant la détente, une première partie de l'air comprimé prélevé de l'accumulateur d'air comprimé (04) est guidée devant l'accumulateur de chaleur (05) et peut ensuite être mélangée avec une deuxième partie de l'air comprimé prélevé de l'accumulateur d'air comprimé (04), chauffée au moyen de la chaleur provenant de l'accumulateur de chaleur (05), pour former un mélange d'air comprimé,
- lequel mélange d'air comprimé est ensuite acheminé à au moins une turbomachine (03) en vue de sa détente,
**caractérisé en ce que**
- l'accumulateur de chaleur (05) est prévu pour prélever et stocker la chaleur produite pendant la compression de l'air comprimé et pour la restituer pendant la détente de l'air comprimé,
- pendant la détente de l'air comprimé, une première partie variable en fonction du temps de l'air comprimé prélevé de l'accumulateur d'air comprimé (04) est guidée devant l'accumulateur de chaleur (05) par le biais de la dérivation (12) et est mélangée avec une deuxième partie de l'air comprimé prélevé de l'accumulateur d'air comprimé (04) qui a été chauffé au moyen de la chaleur prélevée de l'accumulateur de chaleur (05), pour former un mélange d'air comprimé à une température (T) constante à l'entrée de la turbomachine.

2. Procédé selon la revendication 1,
**caractérisé en ce**
**qu'**après le prélèvement de l'air comprimé de l'accumulateur d'air comprimé (04) et avant la détente dans une turbomachine (03), on prévoit un apport supplémentaire de chaleur par combustion.

3. Procédé selon la revendication 2,
**caractérisé en ce que**
pour l'apport supplémentaire de chaleur, un combustible est mélangé avec le mélange d'air comprimé et est allumé et brûlé avant la détente.

4. Procédé selon la revendication 2 ou 3,
**caractérisé en ce que**
pour l'apport supplémentaire de chaleur, un combustible est mélangé à la première partie de l'air comprimé prélevé de l'accumulateur d'air comprimé, allumé et brûlé, et la première partie ainsi chauffée est ensuite mélangée avec la deuxième partie, chauffée au moyen de la chaleur provenant de l'accumulateur de chaleur, de l'air comprimé prélevé de l'accumulateur d'air comprimé (04) pour former un mélange d'air comprimé à une température (T) constante à l'entrée de la turbomachine.

5. Procédé selon l'une quelconque des revendications précédentes,
**caractérisé en ce**
**qu'**une compression de l'air comprimé à une pression (P) constante à l'entrée de la turbomachine est prévue par l'utilisation d'un accumulateur d'air comprimé isobare (04) avant la détente dans une turbomachine (03).

6. Procédé selon l'une quelconque des revendications 1 à 4,
**caractérisé en ce que**
par l'utilisation d'une machine fluidique ayant un rapport de compression variable, l'air comprimé prélevé de l'accumulateur d'air comprimé est comprimé à une pression (P) constante à l'entrée de la turbomachine.

7. Procédé selon l'une quelconque des revendications précédentes,
**caractérisé par**
une turbomachine (02, 03) pour la compression et la détente d'air comprimé.

8. Procédé selon l'une quelconque des revendications précédentes,
**caractérisé en ce que**
la chaleur résiduelle (Q_{F}) encore contenue dans l'air après la détente est acheminée à l'air comprimé prélevé de l'accumulateur d'air comprimé (04) et encore froid.

9. Procédé selon l'une quelconque des revendications précédentes,
**caractérisé en ce que**
la chaleur ambiante est acheminée à l'air comprimé prélevé de l'accumulateur d'air comprimé (04) et encore froid.

10. Centrale d'accumulation d'air comprimé adiabatique (01), comprenant :
- au moins une turbomachine (02) pour la compression d'air comprimé,
- au moins une turbomachine (03) pour la détente d'air comprimé,
- au moins un accumulateur de pression (04) communiquant au moins temporairement mais pas simultanément avec au moins une turbomachine (02) pour la compression d'air comprimé et avec au moins une turbomachine (03) pour la détente d'air comprimé, pour le stockage intermédiaire d'air comprimé compressé,
- au moins un accumulateur de chaleur (05), et
- une dérivation (12) au moyen de laquelle, pendant la détente, une première partie de l'air comprimé prélevé de l'accumulateur d'air comprimé (04) est guidée devant l'accumulateur de chaleur (05) et peut ensuite être mélangée avec une deuxième partie de l'air comprimé prélevé de l'accumulateur d'air comprimé (04), chauffée au moyen de la chaleur provenant de l'accumulateur de chaleur (05), pour former un mélange d'air comprimé,
- lequel mélange d'air comprimé est ensuite acheminé à au moins une turbomachine (03) en vue de sa détente,
**caractérisée en ce que**
- l'accumulateur de chaleur (05) est en liaison, par une première conduite d'amenée et/ou d'évacuation (07) pendant la charge, avec la turbomachine (02) pour la compression d'air comprimé, et pendant la détente, avec la turbomachine (03) pour la détente d'air comprimé,
- une deuxième conduite d'amenée et/ou d'évacuation (08), au moins pendant le fonctionnement de charge **caractérisé par** la compression d'air comprimé avec stockage intermédiaire de la chaleur ainsi produite dans l'accumulateur de chaleur (05) et stockage de l'air comprimé compressé dans l'accumulateur d'air comprimé (04), et pendant le fonctionnement de détente de la centrale d'accumulation d'air comprimé adiabatique (01), **caractérisé par** la détente d'air comprimé avec consommation de la chaleur stockée dans l'accumulateur de chaleur (05) et prélèvement de l'air comprimé compressé hors de l'accumulateur d'air comprimé (04), relie l'accumulateur de chaleur (05) à l'accumulateur d'air comprimé (04), et
- la dérivation (12) peut être réglée de telle sorte que pendant la détente de l'air comprimé, une première partie variable en fonction du temps de l'air comprimé prélevé de l'accumulateur d'air comprimé (04) est guidée devant l'accumulateur de chaleur (05) par le biais de la dérivation (12) et est mélangée avec une deuxième partie de l'air comprimé prélevé de l'accumulateur d'air comprimé (04) qui a été chauffé au moyen de la chaleur prélevée de l'accumulateur de chaleur (05), pour former un mélange d'air comprimé à une température (T) constante à l'entrée dans la turbomachine.

11. Centrale d'accumulation d'air comprimé adiabatique selon la revendication 10,
**caractérisée par**
une turbomachine (02, 03) pour la compression et la détente d'air comprimé.
